# EUROPEAN PATENT SPECIFICATION

(11) **EP 2 812 411 B1**
(45) Date of publication and mention of the grant of the patent: **29.06.2016**
(21) Application number: 13705122.3
(22) Date of filing: 08.02.2013
(51) Int. Cl.: C09K 9/02, G02F 1/15, C07D 213/00

(54) **VOLTAGE-SWITCHABLE NANOPARTICLE-DYE COMPLEX**
NANOPARTIKEL-FÄRBUNGSKOMPLEXE MIT UMSCHALTBARER SPANNUNG
COMPLEXE NANOPARTICULE-COLORANT À COMMUTATION DE TENSION

(30) Priority: 09.02.2012 EP 12154610
(43) Date of publication of application: 17.12.2014
(73) Proprietor: HJ Forever Patents B.V., 3072 AP Rotterdam (NL)
(72) Inventor: WENZ, Robert Paul, Austin, Texas 78732 (US); HENZEN, Alexander Victor, NL-5531 NM Bladel (NL)
(74) Representative: Vogels, Leonard Johan Paul
(86) International application number: PCT/EP2013/052550
(87) International publication number: WO 2013/117701

(56) References cited:
- US-A1- 2002 021 482
- US-A1- 2006 097 233
- US-A1- 2006 209 382

## Description

### FIELD OF THE INVENTION

The present invention relates to a voltage-switchable nanoparticle-dye complex, to a process for its preparation and to the use of it in electrochromic applications. More in particular, the present invention relates to a voltage-switchable nanoparticle-dye complex, to be used for electrochromic technology in electronic paper technology. The invention also relates to a display panel comprising such nanoparticle-dye complex.

### BACKGROUND OF THE INVENTION

The present invention relates to electronic paper technology, or "E-paper" technology, for which the website www.epapercentral.com/epaper-technologies-guide provides an overview of the various "front plane" and "back plane" technologies that are under development to address this emerging display market.

The prior art electrochromic display (ECD) technology offers the benefits of operation at low voltage (< 5 volts), high reflective brightness (uses TiO2 white paint pigment for white state), and bright color. The bright color of ECD technology is due to the intrinsic color associated with the direct absorption of (a limited band of) incident light in the specific electrochromic molecular dye used. Typically, this color is a deep purple or violet for the viologen dyes used. To achieve other colors in an ECD display, overlay color filters are used which combine with the intrinsic color of the dye to cause a combination color to be viewed on the display. Black-white contrast is a desirable, even required, feature of e-book displays such as exists in the popular Kindle eBook. The Kindle, and all versions of it, uses the dominant, competing "electrophoretic display (EPD)" technology which combines electric-charged black and oppositely charged white particles to generate black-white contrast. In EPD technology, when the back plane electrode applies say a positive voltage to the EPD black plane, the positively-charged black particles physically move to the front plane and cause a black pixel (single picture element) to be viewed at the front of the EPD display. Similarly, a negative voltage applied by the backplane electrode moves the white particles to the front plane electrode and the black particles move back to the back plane electrode). One problem with this EPD technology is that the particles tend to "stick" to either the front electrode or back electrode surface thus causing the black-white contrast to appear "grey" over time. Grey pixels offer limited contrast, poor combination colors (unsaturated or "muddy" in appearance), and undesirable "readability" in general. What's needed is a black-white contrast technology for good readability and to provide a basis for good color in e-book displays. A second limitation of current EPD and ECD technology is each technology's relatively slow response speed which limits page refresh rate in e-book readers based on either EPD or ECD technology.

Black-White contrast is a highly desired feature in e-book readers which have as their main purpose to display reading materials which are commonly originated with black-white characters, drawings, and images. Black-white contrast also is necessary to depict colors in high saturation. The present display technology of choice for e-book readers is an electrophoretic technology which "moves" relatively large black or white pigmented particles up or down between two conducting substrates by the action of a medium voltage of 15 volts. EPD technology also suffers from the disadvantage of slow speed since the colored particles must move (drift) through the dispersing medium (e.g. liquid) under the action of an applied voltage between the two conducting substrates. A further limitation is the fact that these colored particles can "stick" to one of the substrate surfaces thus degrading contrast over time. One technology that overcomes the voltage limitation and allowing contrast switching at less than 5 volts is electrochromic display (ECD) technology which applies a low voltage, e.g. 2 volts, to an electrochromic dye, such as viologen, in a redox reaction where the viologen changes charge state by one charge unit which then causes a violet-white contrast to be displayed. A disadvantage of current electrochromic technology is that some of the viologen in an ECD display will undergo a two-charge change in charge state which is irreversible and leaves a 'brownish" residue in the display, thus destroying both color and contrast over time. Another disadvantage of current electrochromic technology is that a significant charge has to be transported in order to effect color change. As a consequence, high current and therefore high energy is needed to change the image on a current electrochromic display. Furthermore, black-white contrast has also been difficult to achieve.

It will be appreciated that there exists a strong need for further improved display technology, wherein the before mentioned drawbacks have been diminished or eliminated.

### SUMMARY OF THE INVENTION

An object of the present invention is therefore to provide display systems, which enable low voltage operation at 5V or less, low current change, a real true black-white contrast and a high speed switching. The invention is defined by the independent claims. The dependent claims define advantageous embodiments.

As result of extensive research and experimentation such a display system has now surprisingly been found.

Accordingly, the present invention relates to a voltage-switchable, nanoparticle-dye complex, obtainable by reacting at least ZnO nanoparticles, TiO₂ nanoparticles and a bipyridine compound wherein each pyridine ring bears at least one carboxyl or carboxaldehyde group, further on to be indicated by "dye" throughout the specification. Said herein before described voltage-switchable nanoparticle-dye complex enables low voltage operation at 5V or less and more in particular in the range from 2 to 5V, a true black-white contrast and high speed switching. In this connection it is assumed that a single charge transfer causing the contrast change is between two semiconducting nanoparticles and an attached dye between two different semiconducting particles and provides a field-induced color change.

It will be appreciated that said system does not show the contrast degrading double redox reaction which is common in ECD's.

Surprisingly such nanoparticles-dye complex switches reversibly under low voltage drive waveform from a pure white state to a pure black state. A black-white state in a pyridine-based dye is totally unexpected.

Moreover, another important advantage of the present invention is formed by a faster refresh enabling video performance, being a desirable factor in e-book displays. Preferred nanoparticle-dye complexes according to the present invention are those derived from a bipyridine dicarboxylic acid or a bipyridine dicarboxaldehyde as dye. More preferred nanoparticle-dye complexes are derived from symmetrical bipyridine compounds.

It will be appreciated that in the bipyridine dicarboxylic acid or bipyridine dicarboxaldehyde, the respective carboxylic acid groups or carboxaldehyde groups may be present in the ortho, meta or para position, relative to the bonding of the pyridine rings, and preferably are present in the para position.

Specific examples of the nanoparticle-dye complexes according to the present invention are obtained from 2,2'-bipyridine-5,5'-dicarboxylic acid, 2,2'-bipyridine-3,3'-dicarboxylic acid or 2,2'-bipyridine-4,4'-dicarboxaldehyde. More preferred are complexes obtained from 2,2'-bipyridine-5,5'-dicarboxylic acid and 2,2'-bipyridine-3,3'-dicarboxylic acid. Moreover, the size of the starting ZnO and TiO₂ particles has been found to be critical. A preferred range of the average size of starting ZnO particles is from 1 nm to 100 nm. A more preferred range runs from 5 nm to 100 nm and still more preferably the average size is from 10 nm to 100 nm.

A preferred range of the average size of starting TiO₂ particles is from 1 nm to 100 nm. A more preferred range runs from 5 nm to 100 nm and still more preferably the average size is from 10 nm to 100 nm.

Said preferred complex of ZnO, TiO₂ and 2,2'-bipyridine-5,5'-dicarboxylic acid (bipy-dca) shows a characteristic peak in its Raman spectrum near 1500 cm⁻¹ and in particular between 1500 cm⁻¹ and 1750 cm⁻¹.

Another aspect of the present invention is formed by a composition for use in electrochromic applications in electronic paper technology or "E-paper" technology, which comprises at least one voltage-switchable nanoparticle-dye complex according to the present invention.

More in particular, said composition can be used in the fields of flat panel displays, optical switches and sensors (optical, chemical, thermal). The largest industrial application is in the field of flat panel displays, in particular e-book readers and tablet PCs.

It will be appreciated that the initial small scale testing experiments were performed by a combination of nanoparticle-dye complex and a dispersing medium such as mineral oil, water and an electrolyte.

Said electrolyte may be selected from a variety of chemical compounds such as inorganic alkali metal or alkaline earth metal salts like sodium chloride, potassium chloride; buffer systems derived from fatty acids and their salts such as oleic acid/sodium oleate/sodium chloride; ionic liquids comprising organic salts which are liquid at ambient temperature and are containing an ammonium ion, imidazolium ion, pyridinium ion, piperidinium ion, pyrrolidinium ion, phosphonium ion or sulphonium ion. Examples thereof are 1-alkyl-2-methylpyridinium, 1-alkyl-3-methylpyridinium, 1-alkyl-4-methylpyrridinium, wherein the alkyl group can be selected from ethyl, n-butyl, isobutyl or 1-propylpyridinium, 1-butylpyridinium, 1-ethylpyridinium, 1-hexylpyridinium. Preferred electrolytes are sodium chloride or potassium chloride.

Still another aspect of the present invention is formed by a process for the manufacture of a nanoparticle-dye complex of the present invention. Such a process comprises:
- preparation of an intimate mixture of ZnO nanoparticles, TiO₂ nanoparticles and an organic acid up to pH 4,
- removal of excess acid,
- optionally mixing the obtained mixture with the bipyridine dicarboxylic acid dye or bipyridine dicarboxaldehyde dye,
- coating said mixture on a substrate layer,
- heating said coated layer at a temperature in the range of from 100 to 140°C during a period of from 15 min to 45 min, and
- optionally followed by impregnation of the obtained product with the bipyridine dicarboxylic acid dye or bipyridine dicarboxaldehyde dye, under the proviso that a dye must be impregnated if a dye has not been added in said earlier steps.

It will be appreciated that the bipyridine dicarboxylic acid dye or bipyridine dicarboxaldehyde dye can be added before or after the heating or both, but according to a preferred embodiment of said process, the bipyridine dicarboxylic acid dye or bipyridine dicarboxaldehyde dye is only added before heating the composition in a coated layer.

According to a particularly preferred embodiment a display coated with said nanoparticle-dye complex is provided by a process, comprising:
- coating a ZnO-TiO₂ paste, or a ZnO-dye-TiO₂ paste, as prepared as hereinbefore specified, and wherein the dye is bipyridine dicarboxylic acid dye or bipyridine dicarboxaldehyde dye, onto a conductive film or pixel of a display panel front plane or a display panel back plane;
- heating the coated display panel front plane or back plane to a temperature from 100°C - 140°C during a period from 15 to 45 minutes and allowing to cool;
- optionally coating a solution of bipyridine dicarboxylic acid dye or bipyridine dicarboxaldehyde dye, organic acid and water onto the coated display panel back plane, under the proviso that a dye must be impregnated if a dye has not been added in said earlier steps;
- coating a solution of mineral oil and electrolyte onto the coated display panel front plane, and
- laminating the front plane to the back plane.

It will be appreciated that the applied organic acid can be selected from a variety of acids which are liquid at ambient temperature, such as acetic acid, oleic acid, citric acid, oxalic acid, glycolic acid, lactic acid, uric acid, tosylic acid and the like.

A preferred acid is acetic acid.

An alternative process for the manufacture of a nanoparticle-dye complex of the present invention comprises:
- preparation of an intimate mixture of ZnO nanoparticles and TiO₂ nanoparticles
- optionally mixing the obtained mixture with the bipyridine dicarboxylic acid dye or bipyridine dicarboxaldehyde dye dissolved in an organic aprotic polar solvent, such as dimethyl sulfoxide (DMSO), and an organic acid (as hereinbefore specified in pages 5 and 6),
- coating the obtained mixture on a substrate layer,
- heating the coated layer to a temperature in the range of from 100 to 140°C during a period of from 15 to 45 minutes, and
- optionally followed by impregnation of the obtained product with a solution of the bipyridine dicarboxylic acid dye or bipyridine dicarboxaldehyde dye dissolved in an organic aprotic polar solvent and an organic acid, under the proviso that a dye must be impregnated if the dye has not been added in said earlier steps.

It will be appreciated that the dye can be added before or after the heating step or both, but preferably the dye is only added before heating the composition in a coated layer. According to a particularly preferred embodiment a display coated with said nanoparticle-dye complex is provided by a process comprising:
- coating a ZnO-TiO₂ paste or a ZnO-dye-TiO₂ paste, wherein the dye is bipyridine dicarboxylic acid dye or bipyridine dicarboxaldehyde and is applied as a solution in an aprotic polar solvent and an organic acid, onto a conductive film or pixel of a display panel front plane or a display panel back plane,
- heating the coated display panel front plane or back plane to a temperature of from 100 to 140°C during a period of from 10 to 45 minutes,
- optionally coating a solution of bipyridine dicarboxylic acid dye or bipyridine dicarboxaldehyde dye dissolved in an organic aprotic polar solvent, such as DMSO ,and an organic acid, under the proviso that a dye must be impregnated if a dye has not been added in said earlier steps,
- coating a solution of mineral oil and electrolyte onto the coated display panel front plane or onto the coated display panel back plane,
- laminating the front plane to the back plane.

The hereinbefore mentioned organic aprotic polar solvent may be selected from halogenated hydrocarbons, ethers, sulfoxides and nitrile compounds.

More specific examples are dichloromethane, trichloromethane (chloroform), tetrahydrofuran (THF), acetonitrile and dimethylsulfoxide (DMSO).

A more preferred solvent is DMSO.

Another aspect of the present invention is formed by a display panel comprising:
- at least one switchable layer (50, 50-1, 50-2, 50-3), comprising at least the nanoparticle dye complex, as described hereinbefore, as such or more preferably in a composition for use in display and electronic paper technology,
- a first electrode and a second electrode (101, 201) being configured and arranged for creating an electric field within the switchable layer in operational use.

### BRIEF DESCRIPTION OF THE DRAWINGS:

These and other aspects of the invention are apparent from and will be elucidated with reference to the embodiments described hereinafter.

In the drawings:
Fig. 1 shows a test structure with which the principle of the invention has been proven first;
Fig. 2 shows a first embodiment of a display panel in accordance with the invention;
Fig. 3 shows a second embodiment of a display panel in accordance with the invention;
Fig. 4 shows a third embodiment of a display panel in accordance with the invention;
Fig. 5 shows a fourth embodiment of a display panel in accordance with the invention;
Fig. 6 shows a fifth embodiment of a display panel in accordance with the invention, and
Fig. 7 shows a sixth embodiment of a display panel in accordance with the invention.

### List of reference numerals:

- 100: back plate (glass)
- 101: first conductive layer (ITO, metal or another conductor) acting as electrode layer
- 50: switchable layer comprising a nanoparticle-dye complex of the invention
- 60: electrolyte
- 200: front plate (glass or plastic)
- 201: second conductive layer (ITO, metal or another conductor) acting as further electrode layer
- 70: insulating layer comprising oxide mix
- 150: seal
- 50-1: first switchable layer comprising a first nanoparticle-dye complex having a first color
- 50-2: second switchable layer comprising a second nanoparticle-dye complex having a second color
- 50-3: third switchable layer comprising a third nanoparticle-dye complex having a third color
- 99: electrical insulator layer
- 102: pixel drivers (e.g. TFT electrodes)
- 160-1: first control electrode of first switchable layer 50-1
- 160-2: second control electrode of second switchable layer 50-2
- 160-3: third control electrode of third switchable layer 50-3
- 160-C: shared common electrode for all switchable layers

### DETAILED DESCRIPTION OF EMBODIMENTS:

The present invention is further illustrated by the following examples, however without restricting its scope to these specific embodiments.

### Example 1

A ZnO-TiO₂ paste was made by ultrasonically mixing for 3 minutes, 100nm ZnO nanoparticles and an equal quantity of 26nm. TiO₂ nanoparticles blended with an amount by volume of 5% glacial acetic acid (pH ~ 3-4). The mixture was allowed to settle leaving a white paste covered by a thin layer of acetic acid. The excess acetic acid was siphoned off, and the remaining paste was coated onto the ITO pixel of a front plane ITO glass substrate as follows:
Thin, Scotch tape was placed on the ITO side of the front plane ITO glass substrate to define the thickness and outline of ZnO-TiO₂ paste layer.

The ZnO-TiO₂ paste was coated and knifed to thickness using the edge of a glass slide. The ZnO-TiO2 paste/ITO/glass substrate was then heated to 130°C for 30 minutes on a hotplate, well below the temperature used to fire a typical ceramic coating.

After cooling, a few drops of a 1% dye suspension of bipy-dca (1% of 2,2'-bipyridine-5,5'-dicarboxylic acid, denoted as a *Linker dye,* in DI water) is added to the ZnO-TiO₂ coated ITO front plane and allowed to soak for 30 minutes, and then dried for 30 minutes at 80°C. Alternatively, the Linker dye can be added to the ZnO-TiO₂/acetic acid paste that is coated onto the ITO front plane and baked at 130°C in the previous step. This ZnO-TiO₂-dye paste can also be applied to the backplane (ITO or metal). Before assembly and edge sealing, the oil-salt-water solution is added. Optionally, a small amount of Linker dye solution may be added when the oil-salt-water solution is added. The backplane ITO electrode was prepared as follows:
A thin coat of ZnO-TiO₂ paste was knife coated onto the ITO backplane and dried on a hotplate at 130°C for 30 minutes.

Just before laminating the backplane to the front plane, an edge seal of epoxy adhesive was applied to the front plane. A KCI electrolyte composed of mineral oil, water and 5% KCI was formulated and a few drops were placed inside the seal area of the front plane. The backplane was laminated to the front plane, weighted down on a hotplate and heat cured at 80°C for 2 hours, and allowed to cool before testing.

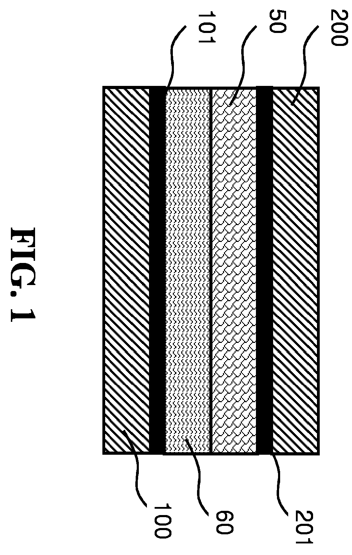

The test cell structure is depicted in Fig. 1. The test structure comprises a back plate 100 (such as a glass plate) onto which a first conductive layer 101, such as metal or Indium-Tin oxide (ITO), is provided, which acts as a first electrode. On the conductive layer 101 there is provided the earlier-mentioned (salt-water-oil) electrolyte 60. On the electrolyte 60 there is provided the switchable layer 50 comprising the voltage-switchable nanoparticle-dye complex of the invention. On the switchable layer 50, there is provided a second conductive layer 201, such as metal or Indium-Tin oxide (ITO). And on top of the stack, there is provided the front plate 200 (such as a glass plate). The used ITO glass was obtained from Delta Technologies, Stillwater, Minnesota, USA. Sheet resistance was measured to be 15 ohms/square.

The formation of the ZnO - bipy-dca - TiO₂ complex was confirmed by the Raman spectrum, near 1500 cm⁻¹ (between 1500 cm⁻¹ and 1750 cm⁻¹), was found to be changed in comparison to the Raman spectrum of a ZnO-TiO₂ nanoparticle complex.

Said ZnO-bipy-dca-TiO₂ complex showed a true black-white contrast and high speed reversibly switching under low voltage (< 5 volts) from a pure white state to a pure black state. Such a black-white state in a pyridine-based dye is totally unexpected to a person skilled in the art. Moreover, said system offered a faster refresh and improved readability.

### Example 2

In the same way as described in Example 1, a ZnO*-Linker* dye-TiO₂ was prepared and tested, wherein the *Linker* dye was 2,2'-bipyridine-3,3'-dicarboxylic acid.

### Example 3

In the same way as described in Example 1, a ZnO-Linker dye-TiO₂ was prepared and tested wherein the *Linkerdye* was 2,2'-bipyridine-4,4'-dicarboxaldehyde.

### Example 4

A ZnO-TiO₂ paste was made by ultrasonically mixing for 3 minutes 100 nm ZnO nanoparticles and an equal quantity of 26 nm TiO₂ nanoparticles.

This mixture was blended with an amount by volume of 5 % glacial acetic acid (pH up to 4) and a few drops of 1 % by volume of a solution of 2,2'-bipyridine-5,5'-dicarboxylic acid denoted as *Linker* dye in DMSO were added.

The mixture was allowed to settle, leaving a paste by a thin layer of acetic acid and solvent.

The excess of solvent and acetic acid was siphoned off and the remaining paste was coated onto the ITO of a front plane ITO glass substrate as follows:
Thin Scotch tape was placed on the ITO side of the glass substrate to define the thickness and outline of the paste layer.
the ZnO*-Linker* dye-TiO₂ paste was coated and knifed to thickness using the edge of a glass slide.

The Zn-O*-Linker* dye-TiO₂ paste /ITO/ glass substrate was then heated to 130°C for 30 minutes on a hotplate, well below the temperature used to fire a typical ceramic coating. Said ZnO*-Linker* dye-TiO₂ paste was also applied to the backplane (ITO or metal)

The back plane ITO electrode as prepared as follows:
A thin coating of e ZnO*-Linker* dye-TiO*₂* paste was knife coated onto the ITO backplane and dried on a hotplate at 130°C for 30 minutes.

Just before laminating the backplane to the front plane, an edge seal of epoxy adhesive was applied to the front plane. An electrolyte composed of mineral oil, water and 5% KCI was formulated and a few drops were placed inside the seal area of the front plane. The backplane was laminated to the front plane, weighted down on a hotplate and heated at 80°C for two hours, and allowed to cool before testing.

The formation of the ZnO*-Linker* dye-TiO₂ complex was confirmed by the Raman spectrum near 1500 cm⁻¹ (between 1500 cm⁻¹ and 1750 cm⁻¹), was found to be changed in comparison to the Raman spectrum of a ZnO-TiO₂ nanoparticle.

Said ZnO*-Linker* dye-TiO₂ complex showed a true black-white contrast and high speed reversibly switching under low voltage (< 5 volts) from a pure white state to a pure black state. Moreover, said system offered a faster refresh and improved readability.

### Example 5

In the same way as described in Example 4 a ZnO*-Linker* dye-TiO₂ was prepared and tested, wherein the *Linkerdye* was 2,2'-bipyridine-3,3'-dicarboxylic acid.

The test structure of Fig. 1 clearly shows a very interesting phenomenon, which can be used in display technology for example, i.e. the color may be changed by changing the voltage over the electrodes. Without being bound by any theory, it is most likely that it is the electrical field generated between the electrodes 101, 201 that causes the color change. It must be noted that the electrolyte 60 in Fig. 1 basically performs the function of bringing the back electrode layer 101 closer (i.e. in electrical contact with) to the switchable layer 50 such that the electrical field over the switchable layer 50 is increased (in comparison with the situation where the electrolyte is replaced with an air gap). By no means is the electrolyte 60 to be considered as essential to the invention as will be shown in the embodiments discussed hereinafter.

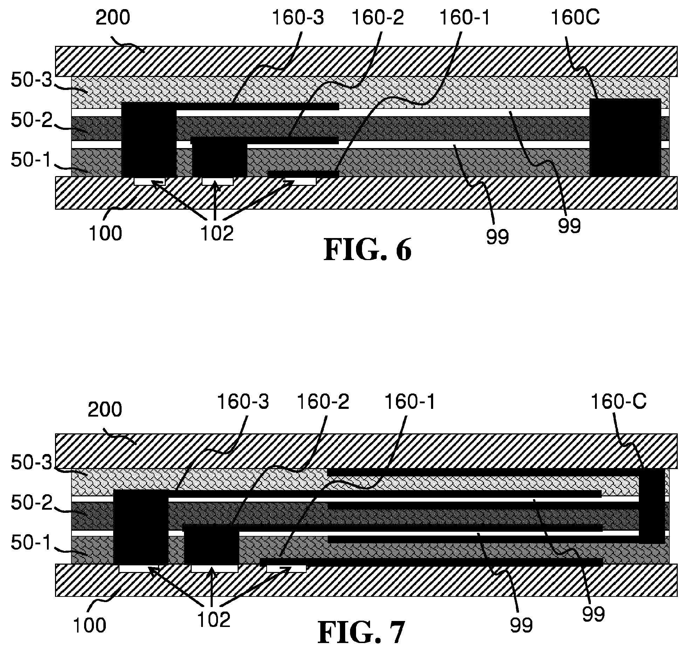

In display technology a rough distinction may be made between in-plane technology and out-of-plane technology. In-plane technology implies that the addressing electrodes for each pixel are located on the same substrate (either front plate or back-plate), i.e. are located in plane. Out-of-plane technology implies that the addressing electrodes for each pixel are located on opposite substrates (i.e. one on the front plate and one of the back plate). The next figures are all simplified in order to facilitate the understanding of the invention. For instance, only a single pixel in a monochromatic display is illustrated in each figure, with the exceptions of Figs. 6 and 7, where three differently colored primaries in a color display are illustrated together forming one pixel. In order to make more pixels, the electrode layers need to be patterned forming multiple column and rows in order to be able to address different pixels individually. A lot of details with regards to display technologies are not discussed, in particular those which are considered to be well-known to the person skilled in the art.

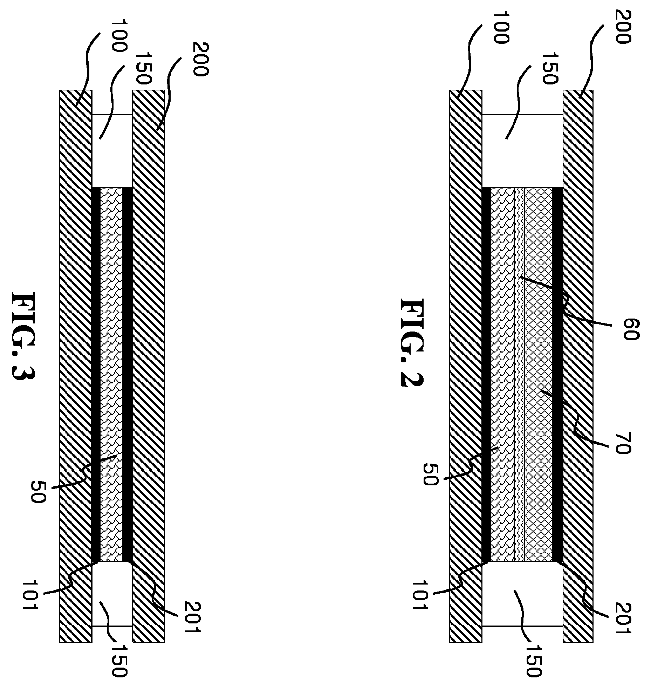

Fig. 2 shows a first embodiment of a display panel in accordance with the invention. This embodiment constitutes an out-of-plane embodiment. This embodiment will be mainly discussed in as far as it differs from Fig. 1. A first electrode layer 101 is provided on a back plate 100 at a side facing the switchable layer 50. Furthermore, a second electrode layer 201 is provided on an inner side of the front plate 200 facing the switchable layer 50. The display panel comprises seals 150 at the sides thereof for fully enclosing the switchable layer 50 together with the respective plates 100, 200. The stack between the respective plates 100, 200 not only comprises an switchable layer 50 in accordance with the invention, it also comprises a insulating layer 70 comprising an oxide mix (for instance titanium oxide (TiO₂) and zinc oxide (ZnO) as discussed earlier in this description. The layer is porous, so the electrolyte will penetrate it.

The insulating layer 70 is separated from the switchable layer 50 by the electrolyte 60 (similar to Fig. 1). The advantage of the electrolyte embodiment of Fig. 2 is that it is quite convenient to manufacture. The electrolyte 60 may be provided after manufacturing of the stack and before sealing of the stack with the seals 150. The seal 150 may comprise a material selected from the group comprising: thermal-curing resins such as epoxies, UV-curing resins such as acrylics, moisture curing resins such as poly-urethanes (non-exhaustive list).

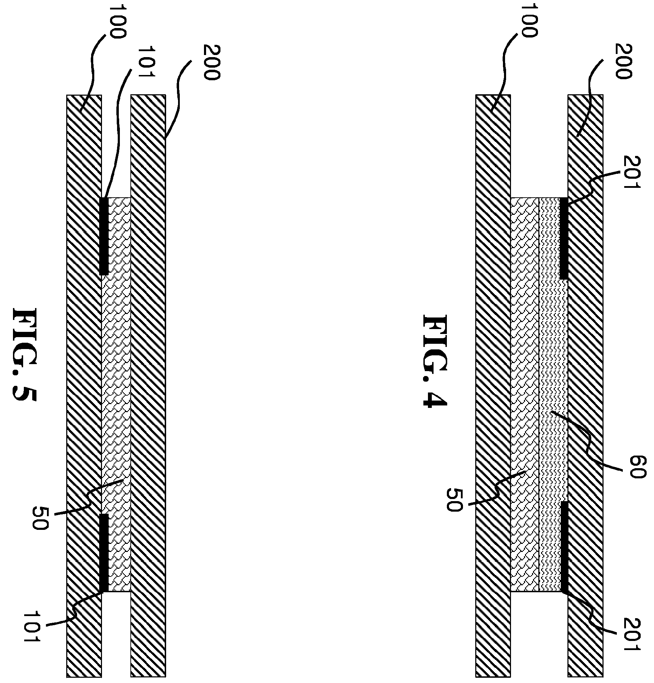

Fig. 3 shows a second embodiment of a display panel in accordance with the invention. Just as Fig. 2, this embodiment also constitutes an out-of-plane embodiment. This embodiment will be discussed in as far as it differs from Fig. 2. The main difference is that the electrolyte 60 and the insulating layer 70 are dispensed with, i.e. the respective electrode layer 101, 201. An advantage of this configuration is that the electrical fields are stronger given a specific voltage between the electrodes 101, 201 and thus the switchable layer 50 may be faster switched or operated at lower voltages reducing the power consumption. The method of manufacturing has to be adapted accordingly such that the second electrode layer 201 may be provided directly on the switchable layer 50. Fig. 4 shows a third embodiment of a display panel in accordance with the invention. Fig. 5 shows a fourth embodiment of a display panel in accordance with the invention. These embodiments constitute in-plane embodiments. These embodiments will be discussed in as far as they differ from the embodiments of Fig. 2 and 3. The two electrodes in Fig. 4 are manufactured in a same layer 201, which is patterned for that purpose. By doing so the electrodes 201 are formed in plane. In the example of Fig. 4 the electrodes 201 are formed on an inner surface of the front plate 200 and separated from the switchable layer 50 by the electrolyte 60. In Fig. 5 the two electrodes are manufacturing in a layer 101 provided on an inner surface of the back plate 100. A further difference between Fig 5 and Fig. 4 is that in Fig. 5 the electrolyte is dispensed with.

The embodiments shown in Figs. 2 to 5 are all monochromatic display panels. However, it is also possible to apply the invention in color display panels as illustrated in Figs. 6 and 7. Fig. 6 shows a fifth embodiment of a display panel in accordance with the invention. This embodiment constitutes an in-plane embodiment. Fig. 7 shows a sixth embodiment of a display panel in accordance with the invention. This embodiment constitutes an out-of-plane embodiment. It is possible to make color pixels by substituting the black dye with a color dye, such as a yellow dye, a magenta, or a cyan dye. In the embodiments of Figs. 6 and 7, there is provided a stack of three switchable layers 50-1, 50-2, 50-3, each layer having its own dye with a different color (in an embodiment yellow, magenta and cyan respectively), wherein in each layer there is formed a respective nanoparticle-dye complex in accordance with the invention. The switchable layer 50-1, 50-2, 50-3 are separated by respective insulating layers 99. The first switchable layer 50-1 is provided with a first control electrode 160-1. The second switchable layer 50-2 is provided with a second control electrode 160-2. The third switchable layer 50-3 is provided with a third control electrode 160-3. All control electrodes 160-1, 160-2, 160-3 are provided at a lower side of the respective switchable layer 50-1, 50-2, 50-3. Alternatively, such electrodes may be provided at an upper side of the respective switchable layer 50-1, 50-2, 50-3, or such electrodes may even be embedded within the respective switchable layer 50-1, 50-2, 50-3. What matters is that the electrodes are placed such that, in operational use, an electric field is created inside the respective switchable layers 50-1, 50-2, 50-3. The respective control electrodes 160-1, 160-2, 160-3 are connected to respective pixel drivers 102 (TFT electrodes) using vias (or contacts). Such vias may be manufactured of the same material as the respective electrodes 160-1, 160-2, 160-3 (thus metal or ITO for example), but this is not essential as long as the vias are of a conducting material. All switchable layers 50-1, 50-2, 50-3 share a common electrode 160C which creates a respective electric field within a respective switchable layer together with the respective control electrode of said layer.

in Fig. 6 the respective control electrodes 160-1, 160-2, 160-3 do not extend over the whole area of the pixel, whereas in Fig. 7 the respective electrodes 160-1, 160-2, 160-3 extend substantially towards the contact or via of the shared common electrode 160-C. Also, in Fig. 7 the shared common electrode 160-C has respective extensions extending in the direction of the respective contacts (or vias) of the respective control electrodes 160-1, 160-2, 160-3. Many variations on the structure of Fig. 6 and 7 are possible. In any case the major differences between Fig. 6 and Fig. 7 reside in that the electrodes are configured for creating a substantially lateral electric field in the switchable layers in Fig. 6 and a substantially vertical (or orthogonal) electric field in the switchable layers in Fig. 7.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. Voltage-switchable nanoparticle-dye complex, obtainable by reacting at least ZnO nanoparticles, TiO₂ nanoparticles and a bipyridine compound wherein each pyridine ring bears at least one carboxyl or carboxaldehyde group.

2. Nanoparticle dye complex according to claim 1, obtainable by reacting a mixture of at least ZnO nanoparticles, TiO₂ nanoparticles and a bipyridine dicarboxylic acid.

3. Nanoparticle dye complex according to claim 1, obtainable by reacting a mixture of at least ZnO nanoparticles, TiO₂ nanoparticles and a bipyridine dicarboxylaldehyde.

4. Nanoparticle dye complex according to claim 2, obtainable by reacting a mixture of at least ZnO nanoparticles, TiO₂ nanoparticles and 2,2'-bipyridine-5,5'-dicarboxylic acid.

5. Nanoparticle dye complex according to claim 2, obtainable by reacting a mixture of at least ZnO nanoparticles, TiO₂ nanoparticles and 2,2'-bipyridine-3,3'-dicarboxylic acid.

6. Nanoparticle-dye complex according to claims 1-5, wherein the ZnO nanoparticles have an average size of from 1 nm to 100 nm.

7. Nanoparticle-dye complex according to claims 1-5, wherein the TiO₂ nanoparticles have an average size of from 1 nm to 100 nm, wherein the ZnO nanoparticles preferably have an average size of from 5 nm to 100 nm and/or wherein the TiO₂ nanoparticles preferably have an average size of from 5 nm to 100 nm.

8. Composition for use in display and electronic paper technology equipment, comprising at least one voltage-switchable nanoparticle-dye complex according to claims 1-7.

9. Process for the manufacture of a nanoparticle-dye complex according to claims 1-7, comprising:
- preparation of an intimate mixture of ZnO nanoparticles, TiO₂ nanoparticles and an organic acid up to pH 4,
- removal of excess acid,
- optionally mixing the obtained mixture with the bipyridine dicarboxylic acid dye or bipyridine dicarboxaldehyde dye,
- coating said mixture on a substrate layer,
- heating said coated layer at a temperature in the range of from 100 to 140°C during a period of from 15 min to 45 min, and
- optionally followed by impregnation of the obtained product with the bipyridine dicarboxylic acid dye or bypiridine dicarboxaldehyde dye, under the provisio that a dye must be impregnated if a dye has not been added in said earlier steps.

10. Process for the manufacture of a display coated with a nanoparticle-dye complex according to claims 1-7, comprising:
- coating a ZnO-TiO₂ paste, or a ZnO-dye-TiO₂ paste, wherein the dye is bipyridine dicarboxylic acid dye or bipyridine dicarboxaldehyde dye, onto a conductive film or pixel of a display panel front plane or a display panel backplane;
- heating the coated display panel front plane or backplane to a temperature from 100 to 140°C for a period of from 10 to 45 minutes and allowing to cool;
- optionally coating a solution of bipyridine dicarboxylic acid dye or bipyridine dicarboxaldehyde dye, organic acid and water onto the coated display panel backplane, under the proviso that a dye must be impregnated if a dye has not been added in said earlier steps;
- coating a solution of mineral oil and electrolyte onto the coated display panel front plane, and
- laminating the front plane to the backplane.

11. Process for the manufacture of a nanoparticle-dye complex according to claims 1-7, comprising:
- preparation of an intimate mixture of ZnO nanoparticles and TiO₂ nanoparticles;
- optionally mixing the obtained mixture with the bipyridine dicarboxylic acid dye or bipyridine dicarboxaldehyde dye dissolved in an organic aprotic polar solvent and an organic acid;
- coating the obtained mixture on a substrate layer;
- heating the coated layer to a temperature in the range of from 100 to 140°C during a period of from 15 to 45 minutes; and
- optionally followed by impregnation of the obtained product with a solution of the bipyridine dicarboxylic acid dye or bipyridine dicarboxaldehyde dye, dissolved in an aprotic polar solvent and an organic acid, under the proviso that a dye must be impregnated if a dye has not been added in said earlier steps.

12. Process for the manufacture of a display coated with a nanoparticle dye complex, according to claims 1-7, comprising:
- coating a ZnO-TiO₂ paste or a ZnO-dye-TiO₂ paste, wherein the dye is bipyridine dicarboxylic acid dye or bipyridine dicarboxaldehyde dye and applied as solution in an aprotic polar solvent and organic acid, onto a conductive film or pixel of a display panel front plane or a display panel back plane;
- heating the coated display panel front plane or back plane to a temperature of from 100 to 140°C during a period of from 10 to 45 minutes;
- optionally coating a solution of bipyridine dicarboxylic acid dye or bipyridine dicarboxaldehyde dye in an aprotic polar solvent and an organic acid under the proviso that the dye must be impregnated if the dye has not been added in said earlier steps;
- coating a solution of mineral oil and electrolyte into the coated display panel front plane or onto the coated display panel back plane;
- laminating the front plane to the back plane.

13. Display panel comprising:
- at least one switchable layer (50, 50-1, 50-2, 50-3) comprising the nanoparticle-dye complex as claimed in any one of claims 1 to 7 or the composition of claim 8;
- a first electrode and a second electrode (101, 201) being configured and arranged for creating an electric field within the switchable layer in operational use.

14. The display panel as claimed in claim 13, wherein the first electrode and the second electrode (101, 201) are arranged in-plane or wherein the first electrode and the second electrode (101, 201) are arranged out-of-plane.

15. The display panel as claimed in any one of claims 13 to 14, wherein the at least one switchable layer (50, 50-1, 50-2, 50-3) comprises at least two switchable layers, wherein a first one of the at least two switchable layers comprises a nanoparticle-dye complex with a differently-colored dye than a second one of the at least two switchable layers.

## Patentansprüche

1. Nanopartikel-Färbungskomplex mit umschaltbarer Spannung, erhältlich durch Reagieren von wenigstens ZnO-Nanopartikeln, TiO₂-Nanopartikeln und einer Bipyridin-Verbindung, wobei jeder Pyridin-Ring wenigstens eine Carboxyl- oder Carboxaldehyd-Gruppe trägt.

2. Nanopartikel-Färbungskomplex nach Anspruch 1, erhältlich durch Reagieren einer Mischung von wenigstens ZnO-Nanopartikeln, TiO₂-Nanopartikeln und einer Bipyridin-Dicarboxylsäure.

3. Nanopartikel-Färbungskomplex nach Anspruch 1 erhältlich, durch Reagieren einer Mischung von wenigstens ZnO-Nanopartikeln, TiO₂-Nanopartikeln und eines Bipyridindicarboxylaldehyds.

4. Nanopartikel-Färbungskomplex nach Anspruch 2, erhältlich durch Reagieren einer Mischung von wenigstens ZnO-Nanopartikeln, TiO₂-Nanopartikeln und einer 2,2'-Bipyridin-5,5'-Dicarboxylsäure.

5. Nanopartikel-Färbungskomplex nach Anspruch 2, erhältlich durch Reagieren einer Mischung von wenigstens ZnO-Nanopartikeln, TiO₂-Nanopartikeln und einer 2,2'-Bipyridin-3,3'-Dicarboxylsäure.

6. Nanopartikel-Färbungskomplex nach den Ansprüchen 1 - 5, wobei die ZnO-Nanopartikel eine durchschnittliche Größe von 1 nm bis 100 nm aufweisen.

7. Nanopartikel-Färbungskomplex nach den Ansprüchen 4 - 5, wobei die TiO₂-Nanopartikel eine durchschnittliche Größe von 1 nm bis 100 nm aufweisen, wobei die ZnO-Nanopartikel vorzugsweise eine durchschnittliche Größe von 5 nm bis 100 nm und/oder wobei die TiO₂-Nanopartikel vorzugsweise eine durchschnittliche Größe von 5 nm bis 100 nm aufweisen.

8. Zusammensetzung zur Verwendung in Anzeige- und elektronischen Papiertechnologievorrichtungen, die wenigstens einen Nanopartikel-Färbungskomplex mit umschaltbarer Spannung nach den Ansprüchen 1 - 7 aufweist.

9. Verfahren zur Herstellung eines Nanopartikel-Färbungskomplexes nach den Ansprüchen 1 - 7, welches Folgendes aufweist:
- Zubereitung einer innigen bzw. untrennbaren Mischung von ZnO-Nanopartikeln, TiO₂-Nanopartikeln und einer organischen Säure bis zu pH 4,
- Entfernen von überschüssiger Säure,
- optional Mischen der erlangten Mischung mit dem Bipyridin-Dicarboxylsäure-Färbemittel oder dem Bipyridin-Dicarboxaldehyd-Färbemittel,
- Beschichtung der Mischung auf einer Oberflächenschicht,
- Erwärmen der beschichteten Schicht auf eine Temperatur in dem Bereich von 100 bis 140 °C über eine Zeitdauer von 15 min. bis 45 min., und
- optional gefolgt von dem Imprägnieren des erlangten Produkts mit dem Bipyridin-Dicarboxylsäure-Färbemittel oder dem Bipyridin-Dicarboxaldehyd-Färbemittel unter der Voraussetzung, dass ein Färbemittel imprägniert werden muss, wenn in den vorhergehenden Schritten kein Färbemittel hinzugegeben worden ist.

10. Verfahren zur Herstellung einer Anzeige, die mit einem Nanopartikel-Färbungskomplex nach den Ansprüchen 1 - 7 beschichtet ist, welches Folgendes aufweist:
- Beschichten einer ZnO-TiO2-Paste oder einer ZnO-Färbemittel-TiO2-Paste, wobei das Färbemittel Bipyridin-Dicarboxylsäure-Färbemittel oder Bipyridin-Dicoarboxaldehyd-Färbemittel ist, auf eine Leiterfolie oder Pixel einer vorderen Ebene eines Anzeigefelds oder einer hinteren Ebene eines Anzeigefelds;
- Erwärmen der vorderen Ebene oder der hinteren Ebene des beschichteten Anzeigefelds auf eine Temperatur von 100 bis 140 °C für eine Zeitdauer von 10 bis 45 Minuten und Ermöglichen der Abkühlung;
- optional Beschichten einer Lösung von Bipyridin-Dicarboxylsäure-Färbemittel oder Bipyridin-Dicarboxaldehyd-Färbemittel, organischer Säure und Wasser auf die beschichtete hintere Ebene des Anzeigefelds unter der Voraussetzung, dass ein Färbemittel imprägniert werden muss, falls in den vorhergehenden Schritten kein Färbemittel hinzugegeben worden ist;
- Beschichten einer Lösung von Mineralöl und Elektrolyt auf die beschichtete vordere Ebene des Anzeigefelds; und
- Laminieren der vorderen Ebene auf die hintere Ebene.

11. Verfahren zur Herstellung eines Nanopartikel-Färbemittelkomplexes nach den Ansprüchen 1 - 7, welches Folgendes aufweist:
- Zubereitung einer innigen bzw. untrennbaren Mischung von ZnO-Nanopartikeln und TiO₂-Nanopartikeln;
- optional Mischen der erhaltenen Mischung mit dem Bipyridin-Dicarboxylsäure-Färbemittel oder dem Bipyridin-Dicarboxaldehyd-Färbemittel, die in einem organischen, aprotischen, polaren Lösungsmittel und einer organischen Säure aufgelöst sind;
- Beschichten der erlangten Mischung auf eine Oberflächenschicht;
- Erwärmen der beschichteten Schicht auf eine Temperatur in dem Bereich von 100 bis 140 °C über eine Zeitdauer von 15 bis 45 Minuten; und
- optional gefolgt von der Imprägnierung des erlangten Produkts mit einer Lösung des Bipyridin-Dicarboxylsäure-Färbemittels oder des Bipyridin-Dicoarboxaldehyd-Färbemittels, aufgelöst in einem aprotischen, polaren Lösungsmittel und einer organischen Säure, unter der Voraussetzung, dass ein Färbemittel imprägniert werden muss, wenn in den vorhergehenden Schritten kein Färbemittel hinzugegeben worden ist.

12. Verfahren zur Herstellung einer Anzeige, die mit einem Nanopartikel-Färbungskomplex nach den Ansprüchen 1 - 7 beschichtet ist, welches Folgendes aufweist:
- Beschichten einer ZnO-TiO2-Paste oder einer ZnO-Färbemittel-TiO2-Paste, wobei das Färbemittel Bipyridin-Dicarboxylsäure-Färbemittel oder Bipyridin-Dicoarboxaldehyd-Färbemittel ist und als eine Lösung in einem aprotischen, polaren Lösungsmittel und einer organischen Säure aufgetragen ist;
- Erwärmen der vorderen Ebene oder hinteren Ebene des beschichteten Anzeigefelds auf eine Temperatur von 100 bis 140 °C für eine Zeitdauer von 10 bis 45 Minuten;
- optional Beschichten einer Lösung von Bipyridin-Dicarboxylsäure-Färbemittel oder Bipyridin-Dicarboxaldehyd-Färbemittel in einem aprotischen, polaren Lösungsmittel und einer organischer Säure, unter der Voraussetzung, dass das Färbemittel imprägniert werden muss, falls in den vorhergehenden Schritten kein Färbemittel hinzugegeben worden ist;
- Beschichten einer Lösung von Mineralöl und Elektrolyt in die beschichtete vordere Ebene des Anzeigefelds oder auf die beschichtete hintere Ebene des Anzeigefelds; und
- Laminieren der vorderen Ebene auf die hintere Ebene.

13. Anzeigefeld, welches Folgendes aufweist:
- wenigstens eine umschaltbare Schicht (50,50-1,50-2,50-3), welche den Nanopartikel-Färbekomplex nach einem der Ansprüche 1 bis 7 oder die Zusammensetzung von Anspruch 8 aufweist;
- eine erste Elektrode und eine zweite Elektrode (101,201), die dafür vorgesehen und angeordnet sind, bei der Benutzung ein elektrisches Feld innerhalb der umschaltbaren Schicht zu erzeugen.

14. Anzeigefeld nach Anspruch 13, wobei die erste Elektrode und die zweite Elektrode (101,201) in einer Ebene angeordnet sind oder wobei die erste Elektrode und die zweite Elektrode (101,201) in unterschiedlichen Ebenen angeordnet sind.

15. Anzeigefeld nach einem der Ansprüche 13 oder 14, wobei die wenigstens eine umschaltbare Schicht (50,50-1,50-2,50-3) wenigstens zwei umschaltbare Schichten aufweist, wobei eine erste der wenigstens zwei umschaltbaren Schichten einen Nanopartikel-Färbekomplex mit einem unterschiedlich gefärbten Färbemittel im Vergleich zu einer zweiten der wenigstens zwei umschaltbaren Schichten aufweist.

## Revendications

1. Complexe de nanoparticules colorantes commutable par la tension, obtenu par la réaction d'au moins de nanoparticules de ZnO, de nanoparticules de TiO₂ et d'un composé de bipyridine, dans lequel chaque anneau de pyridine porte au moins un groupe carboxyle ou carboxaldéhyde.

2. Complexe de nanoparticules colorantes selon la revendication 1, obtenu par la réaction d'une mixture d'au moins de nanoparticules de ZnO, de nanoparticules de TiO₂ et d'acide dicarboxylique de bipyridine.

3. Complexe de nanoparticules colorantes selon la revendication 1, obtenu par la réaction d'une mixture d'au moins de nanoparticules de ZnO, de nanoparticules de TiO₂ et de dicarboxylaldéhyde de bipyridine.

4. Complexe de nanoparticules colorantes selon la revendication 2, obtenu par la réaction d'au moins de nanoparticules de ZnO, de nanoparticules de TiO₂ et de 2,2'-bipyridine-5,5'-acide dicarboxylique.

5. Complexe de nanoparticules colorantes selon la revendication 2, obtenu par la réaction d'au moins de nanoparticules de ZnO, de nanoparticules de TiO₂ et de 2,2'-bipyridine-3,3'-acide dicarboxylique.

6. Complexe de nanoparticules colorantes selon les revendications 1-5, dans lequel les nanoparticules de ZnO ont une dimension moyenne de 1 nm à 100 nm.

7. Complexe de nanoparticules colorantes selon les revendications 1-5, dans lequel les nanoparticules de TiO₂ ont une dimension moyenne de 1 nm à 100 nm, dans lequel les nanoparticules de ZnO ont de préférence une dimension moyenne de 5 nm à 100 nm et/ou les nanoparticules de TiO₂ ont de préférence une dimension moyenne de 5 nm à 100 nm.

8. Composition utilisable pour l'affichage et pour des équipements de technologie électronique papier, comportant au moins un complexe de nanoparticules colorantes selon les revendications 1-7.

9. Procédé de fabrication d'un complexe de nanoparticules colorantes selon les revendications 1-7, comportant :
- la préparation d'un mélange intime de nanoparticules de ZnO, de nanoparticules de TiO₂ et d'un acide organique jusqu'à la valeur 4 du pH,
- l'évacuation de l'excès d'acide,
- le mixage optionnel du mélange obtenu avec le colorant d'acide dicarboxylique de bipyridine ou de dicarboxaldéhyde,
- l'étalement d'une couche du mélange sur un substrat,
- le chauffage de ladite couche de revêtement à une température de l'ordre de 100 à 140°C pendant une période de 15 min à 45 min, et
- l'imprégnation suivante optionnelle du produit obtenu avec le colorant d'acide dicarboxylique de bipyridine ou de dicarboxaldéhyde, sous réserve qu'un colorant doit être imprégné si un colorant ne doit pas être additionné au cours des étapes précédentes.

10. Procédé de fabrication d'un complexe de nanoparticules colorantes selon les revendications 1-7, comportant :
- le revêtement avec une pâte de ZnO - TiO₂, ou de colorant ZnO-TiO₂, dans lequel le colorant est un colorant acide dicarboxylique de bipyridine ou un colorant de dicarboxaldéhyde, appliqué sur un film conducteur ou des pixels d'un panneau d'affichage frontal plan ou un panneau d'affichage arrière ;
- le chauffage du panneau d'affichage frontal plan ou du panneau d'affichage arrière jusqu'à une température de 100 à 140 °C pendant une période de 10 à 45 minutes puis l'autorisation de refroidir ;
- le revêtement optionnel avec une solution de colorant d'acide dicarboxylique de bipyridine ou un colorant de dicarboxaldéhyde, d'acide organique et d'eau sur le panneau d'affichage arrière sous réserve qu'un colorant doit être imprégné si un colorant n'a pas été additionné au cours des étapes précédentes ;
- le revêtement avec une solution d'huile minérale et d'électrolyte sur le panneau d'affichage frontal revêtu, et
- le laminage de la face frontale de la surface arrière.

11. Procédé de fabrication d'un complexe de nanoparticules colorantes selon les revendications 1-7, comportant :
- la préparation d'un mélange intime de nanoparticules de ZnO et de nanoparticules de TiO₂ ;
- le mixage optionnel du mélange obtenu avec le colorant d'acide dicarboxylique de bipyridine ou de colorant d'acide de dicarboxaldéhyde de bipyridine ;
- l'étalement d'une couche du mélange sur un substrat ;
- le chauffage du panneau d'affichage frontal plan ou du panneau d'affichage arrière jusqu'à une température de 100 à 140 °C pendant une période de 15 à 45 minutes ;
- l'imprégnation optionnelle suivant du produit obtenu avec une solution de colorant d'acide dicarboxylique de bipyridine ou un colorant de dicarboxaldéhyde, dissout dans un solvant polaire aprotique et un acide organique, sous réserve qu'un colorant doit être imprégné si un colorant n'a pas été additionné au cours des étapes précédentes.

12. Procédé de fabrication d'un complexe de nanoparticules colorantes selon les revendications 1-7, comportant :
- le revêtement avec une pâte de ZnO - TiO₂, ou de colorant ZnO - TiO₂, dans lequel le colorant est un colorant acide dicarboxylique de bipyridine ou un colorant de dicarboxaldéhyde, appliqué sur un film conducteur ou des pixels d'un panneau d'affichage frontal plan ou un panneau d'affichage arrière ;
- le chauffage du panneau d'affichage frontal plan ou du panneau d'affichage arrière jusqu'à une température de 100 à 140 °C pendant une période de 10 à 45 minutes ;
- le revêtement optionnel avec une solution de colorant d'acide dicarboxylique de bipyridine ou un colorant de dicarboxaldéhyde, d'acide organique dans un solvant polaire aprotique et un acide organique, sous réserve qu'un colorant doit être imprégné si un colorant n'a pas été additionné au cours des étapes précédentes ;
- le revêtement d'une solution d'huile minérale et d'électrolyte sur le panneau d'affichage frontal ou sur le panneau d'affichage arrière ;
- le laminage de la face frontale de la surface arrière.

13. Panneau d'affichage comportant :
- au moins une couche commutable (50, 50-1, 50-2, 50-3) comportant le complexe de nanoparticules colorantes selon les revendications 1 à 7 ou la composition selon la revendication 8 ;
- une première électrode et une seconde électrode (101, 201) configurée et agencée pour créer un champ électrique dans la couche commutable en utilisation opérationnelle.

14. Panneau d'affichage selon la revendication 13, dans lequel la première et la seconde électrode (101, 201) sont disposées dans un plan ou, dans lequel la première et la seconde électrode (101, 201) sont disposées hors d'un plan.

15. Panneau d'affichage selon les revendications 13 à 14, dans lequel au moins une des couches commutables (50, 50-1, 50-2, 50-3) comporte au moins deux couches commutables, dans lequel une premières des au moins deux couches commutables comporte un complexe de nanoparticules colorantes avec un colorant coloré différemment qu'une deuxième des au moins deux couches commutables.
